# EUROPÄISCHE PATENTSCHRIFT

(11) **EP 0 987 302 B1**
(45) Veröffentlichungstag und Bekanntmachung des Hinweises auf die Patenterteilung: **27.11.2002**
(21) Anmeldenummer: 99117401.2
(22) Anmeldetag: 07.09.1999
(51) Int. Cl.: C09B 23/02, C09B 23/00, G03C 1/14, G03C 1/12, G03C 1/29, C09B 23/06, C09B 23/08

(54) **Cyaninfarbstoffe**
Cyanine dyestuffs
Colorants de type cyanine

(30) Priorität: 19.09.1998 DE 19843082
(43) Veröffentlichungstag der Anmeldung: 22.03.2000
(73) Patentinhaber: AGFA-GEVAERT, 2640 Mortsel (BE)
(72) Erfinder: Missfeldt, Michael, Dr., 42799 Leichlingen (DE); Herrmann, Stefan, Dr., 53123 Bonn (DE)

(56) Entgegenhaltungen:
- EP-A- 0 648 813
- DE-A- 19 724 585
- DE-B- 1 053 309
- US-A- 5 516 628

## Beschreibung

Die Erfindung betrifft Cyaninfarbstoffe gemäß Formel (I), sowie ein farbfotografisches Material welches Cyaninfarbstoffe der Formel (I) enthält und die Verwendung von Verbindungen der Formel (I) als Spektralsensibilisatoren.

Die Verbesserung der spektralen Empfindlichkeit fotografischer Materialien ist eine permanente Herausforderung. Durch Verwendung von Polymethinfarbstoffen ist es möglich, die Empfindlichkeit über den Eigenempfindlichkeitsbereich hinaus zu erweitern. Hierfür sind Cyanine besonders geeignet. Aus der DE 1 053 309 sind spektrale Sensibilisatoren mit einem Thienylsubstituenten am Benzokern bekannt, die auf Silberhalogenid-Emulsionen zu guten spektralen Empfindlichkeiten führen.

Es besteht jedoch Bedarf an spektralen Sensibilisatoren welche, insbesondere bei Verwendung in Tab-Grain Emulsionen über eine erhöhte spektrale Empfindlichkeit verfügen.

Der vorliegenden Erfindung liegt die Aufgabe zugrunde Cyaninfarbstoffe bereit zu stellen, welche sich durch eine besonders hohe spektrale Empfindlichkeit und gleichzeitig durch eine gute Lagerstabilität insbesondere unter Tropenbedingungen auszeichnen

Überraschenderweise wurde gefunden , daß Cyaninfarbstoffe gemäß Formel (I) in der mindestens einer der Substituenten R¹, R² oder R³ für Benzthienyl steht, über eine hervorragende spektrale Empfindlichkeit, bei gleichzeitig guter Lagerstabilität, insbesondere unter Tropenbedingungen, verfügen.

Gegenstand der vorliegenden Anmeldung sind Cyaninfarbstoffe der Formel (I) 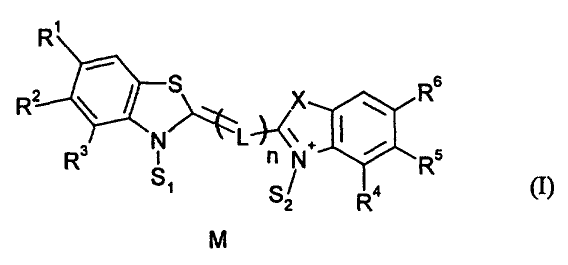 in der
- R¹, R², R³,R⁴, R⁵, R⁶: unabhängig voneinander H, einen Substituenten oder R⁵ zusammen mit R⁶ oder R⁴ zusammen mit R⁵ die restlichen Glieder zur Vervollständigung eines gegebenenfalls substituierten ankondensierten Benzoringes oder Naphthoringsystems, bedeuten, mit der Maßgabe, daß mindestens einer der Substituenten R¹, R² oder R³ ein Benzthienylsubstituent ist,
- X: für O, S, Se,CH=CH, C(CH₃)₂ oder NR₇ (R₇ = gegebenenfalls substituiertes Alkyl) steht,
- S₁, S₂: unabhängig voneinander Alkyl, Sulfoalkyl, Carboxyalkyl, -(CH₂)₁-SO₂-Y-SO₂-Alkyl, -(CH₂)₁-SO₂-Y-CO-Alkyl, -(CH₂)₁-CO-Y-SO₂-Alkyl, -(CH₂)₁NHSO⁻₃, -(CH₂)₁N(Alkyl)SO⁻₃, -(CH₂)₁N(Aryl)SO⁻₃, -(CH₂)₁-CO-Y-CO-Alkyl bedeuten, mit der Maßgabe, daß 1 1 bis 6 und Y NH oder N⁻ bedeuten.
- n: 3, 5 oder 7 bedeutet,
- L: für substituierte oder unsubstituierte Methingruppen, die Bestandteile eines oder mehrerer carbocyclischer Ringe sein können, und
- M: für ein gegebenenfalls zum Ladungsausgleich erforderliches Gegenion stehen.

Der Benzthienyl-Rest kann über die 2-, 3-, 4-, 5-, 6- oder 7-Position mit dem Benzoring verknüpft sein.

Unter einem Substituenten im Sinne der vorliegenden Anmeldung sind soweit nicht anders definiert, Halogen, insbesondere Fluor, Chlor oder Brom, Alkyl-, Alkoxy-, Aryl-, Aryloxy-, Hetaryl- und Alkenylsubstituenten sowie CF₃, CN oder, im Falle von X = S, ein Benzthienylsubstituent, der über seine 2-, 3-, 4-, 5-, 6- oder 7-Position mit dem Benzoring verknüpft ist, zu verstehen.

Unter Alkyl im Sinne der vorliegenden Anmeldung sind lineare oder verzweigte, cyclische oder geradkettige, substituierte oder nicht substituierte Kohlenwasserstoffgruppen zu verstehen vorzugsweise handelt es sich um Alkylgruppen mit 1 bis 20 C-Atomen, insbesondere 1 bis 6 C-Atomen, als offenkettige Alkylgruppen kommen insbesondere Methyl-, Ethyl-, n-Propyl-,n- Butyl und n-Pentyl sowie als verzweigte Alkylreste insbesondere methyl- oder ethylverzweigte in Frage.

Unter Alkenyl im Sinne der vorliegenden Erfindung sind lineare oder verzweigte, cyclische oder geradkettige, substituierte oder nicht substituierte ungesättigte Kohlenwasserstoffreste zu verstehen wie beispielsweise Ethenyl, 2-Propenyl.

Unter Aryl im Sinne der vorliegenden Anmeldung sind aromatische Kohlenwasserstoffgruppen zu verstehen, wobei es sich vorzugsweise um 5- oder 6-gliedrige Ringsysteme handelt, welche monocyclisch aber auch als kondensierte Ringsysteme vorliegen können. Es kann sich dabei sowohl um substituierte als auch um nicht substituierte Ringsysteme handeln. Besonders bevorzugt sind beispielsweise Phenyl- und Naphthylgruppen.

Unter Hetaryl sind im Sinne der vorliegenden Anmeldung, soweit nicht anders definiert, aromatische Systeme zu verstehen, welche mindestens ein Heteroatom enthalten. Es kann sich dabei sowohl um substituierte als auch um nicht substituierte Ringsysteme handeln. Typische Beispiele sind Pyridin, Pyridazin, Pyrimidin, Pyrazine, Oxazol, Isoxazol, Thiazole, 3,4-Oxdiazol, 1,2,4-Oxdiazol, Imidazol, Indol, 1,2,3-Triazol, 1,2,4-Triazol, insbesondere bevorzugte heterocyclische Substituenten sind 2-Furanyl, 3-Furanyl, Pyrrolyl, 2-Thienyl, 3-Thienyl und Indolyl.

Unter Alkoxy sind im Sinne der vorliegenden Anmeldung Substituenten der Formel OR zu verstehen, in der R für einen Alkylrest mit der oben angegebenen Bedeutung steht. Es handelt sich dabei beispielsweise um Methoxy-, Ethoxy-, Propoxy- oder Butoxysubstituenten.

Unter Aryloxy sind im Sinne der vorliegenden Anmeldung Substituenten der Formel OR zu verstehen, in der R für einen Arylrest mit der oben angegebenen Bedeutung steht. Es handelt sich dabei beispielsweise um Phenoxy- oder Naphthoxysubstituenten.

Als Gegenionen M im Sinne der vorliegenden Erfindung kommen, soweit nicht anders definiert, je nach Substituenten und damit Ladungsverhältnissen beispielsweise folgende Verbindungen in Frage: Tosylat, I⁻, Br⁻, Cl⁻ vorzugsweise Diazabicyclooctan-H⁺ (DABCOH⁺) oder Diazabicycloundecan-H⁺ (DBUH⁺), insbesondere Na⁺, Li⁺, K⁺ und besonders bevorzugt Et₃N⁺H.
- n: steht für 7, vorzugsweise für 5, insbesondere für 3,
- L: kann beispielsweise fiir =C- oder als Bestandteil eines Ringsystems für 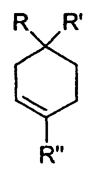 stehen.

Daraus ergeben sich beispielsweise die folgenden Kombinationen:
für 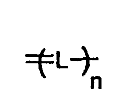
für n=3 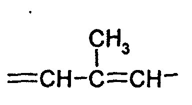 oder vorzugsweise 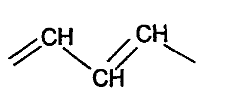 bzw. 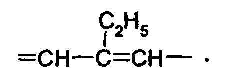
Für n=5 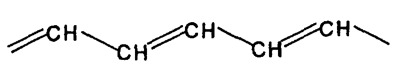 oder vorzugsweise 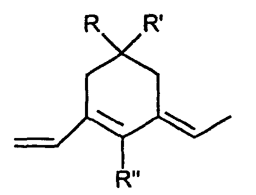
Für n=7 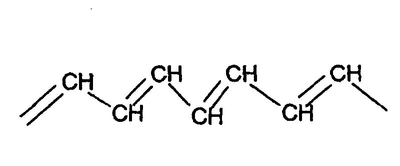 oder 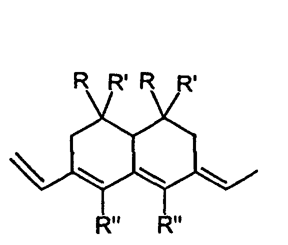 oder 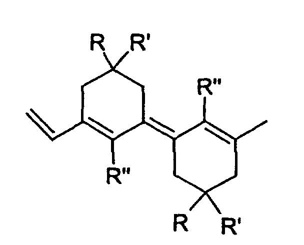 oder vorzugsweise

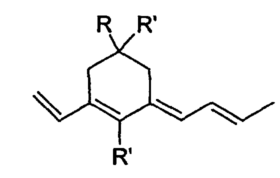

- R und R': stehen bevorzugt für H, Aryl oder Alkyl und R" steht für H, Halogen, N-Tetrahydropyrrolyl, N-Piperidinyl, N-(Alkyl)₂, N-(Aryl)₂ oder S-Alkyl.

Gemäß der vorliegenden Erfindung bevorzugt einzusetzende Sensibilisatoren werden nachfolgend aufgeführt:

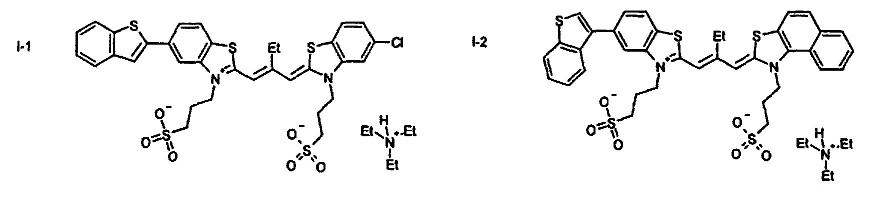

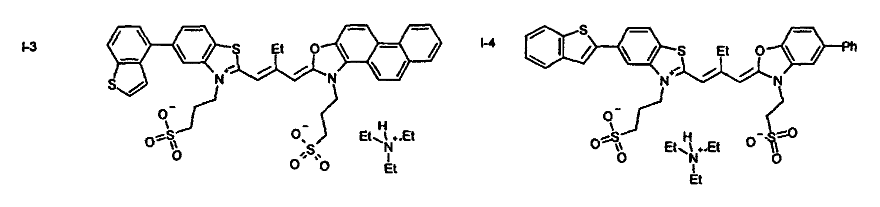

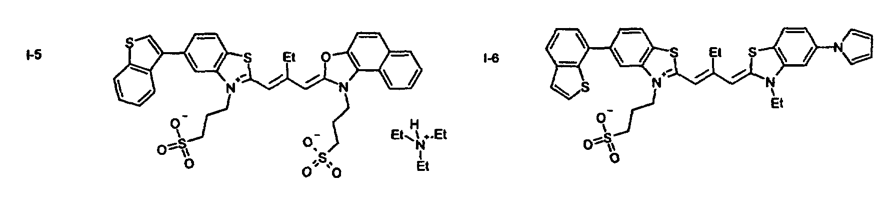

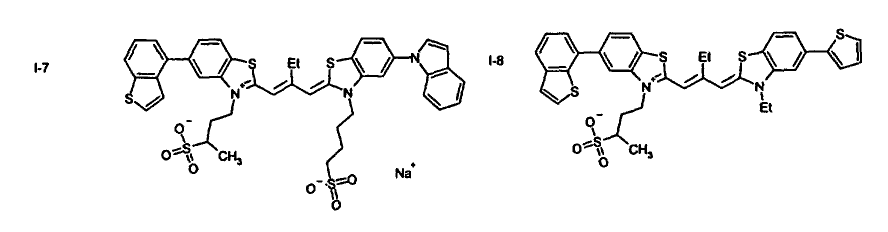

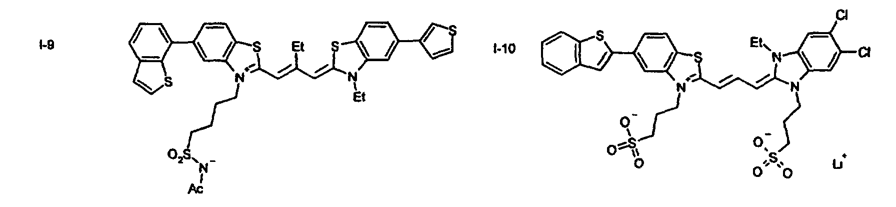

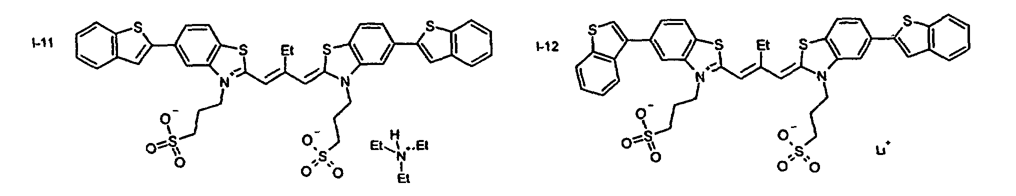

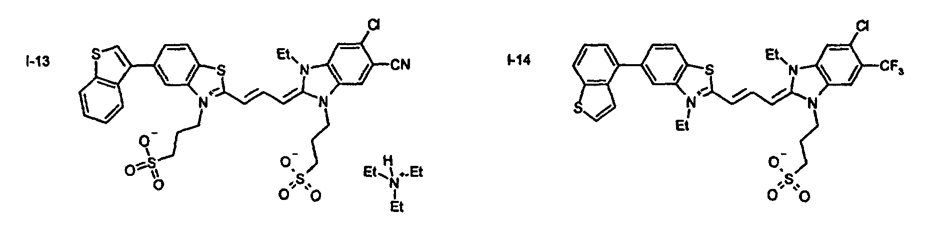

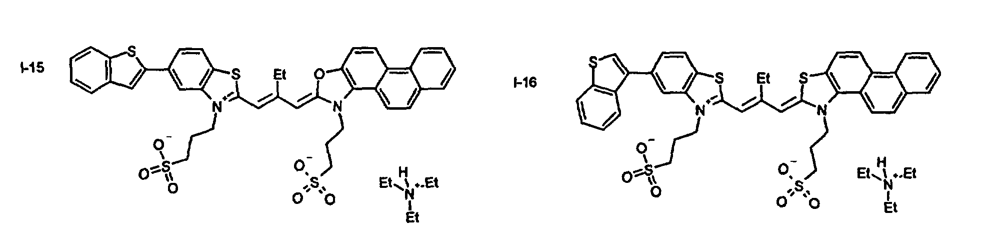

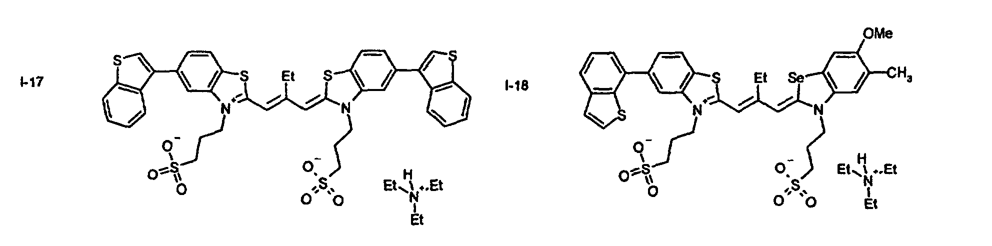

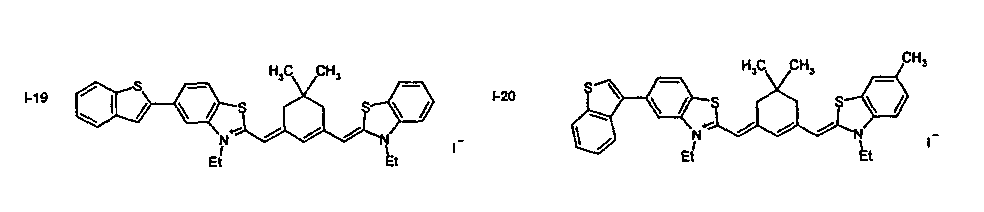

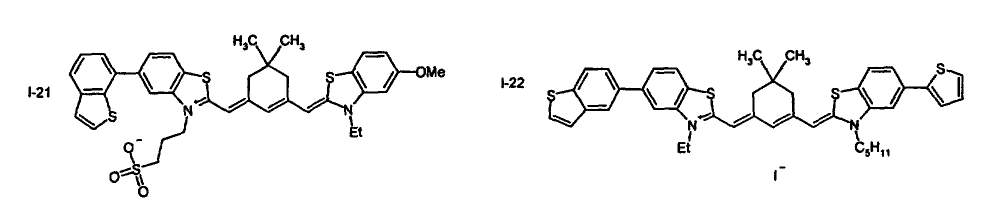

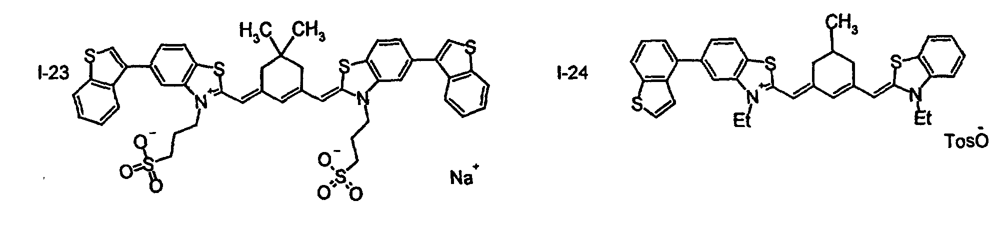

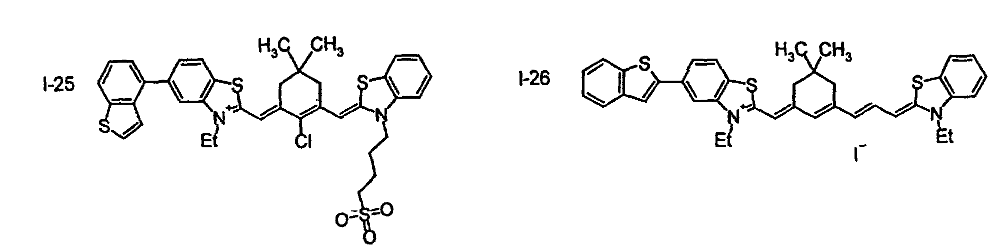

In den Formeln I-1 bis I-26 bedeuten "Me" Methyl, "Et" Ethyl, "Ph", Phenyl und "TsO⁻" Toluolsulfonat.

### Synthese des Farbstoffes I-11

Die Synthese von 6 erfolgte analog nach den in J. Heterocyclic Chem., **25**, 1437 (1988) beschriebenen Methoden. Die katalytische Hydrierung zu 7 erfolgte in einem Autoklaven, mit Ra-Ni als Katalysator. Die Bildung von 8 aus 7 erfolgte analog nach einer in Chem. Ber., **36**, 3121 (1903) beschriebenen Methode. Verseifung von 8 mit wäßriger Alkali und anschließender Acetylierung führt zur Diacetylverbindung 9, welche bei 180-200°C thermisch zur Thiazolbase 10 cyclisiert wird.

### Synthese des Quartärsalzes 11

1.41 g (5 mmol) 10 und 0.61 g (5 mmol) 1, 3-Propansulton werden in 4 ml Dichlorbenzol 8 h bei 150°C gerührt. Nach Abkühlen auf Raumtemperatur gibt man 20 ml Aceton zu, kocht kurz auf, saugt nach Abkühlen ab und wäscht gründlich mit Aceton nach. Der Rückstand wird in 20 ml Methanol ausgekocht.
Ausbeute: 1.63 g (81 % d. Th.)

### Synthese des Farbstoffes I-11

1.61 g (4 mmol) 11 werden in 10 ml m-Kresol heiß gelöst und bei ca. 100°C Innentemperatur mit 5.29 g (30 mmol) Orthopropionsäuretriethylester versetzt und 30 Minuten bei 95°C gerührt. Nach Abkühlen auf Raumtemperatur gibt man eine Lösung von 1.61 g (4 mmol) 11, gelöst in 10 ml m-Kresol, zu und dosiert bei Raumtemperatur innerhalb von 5 Minuten 1.78 ml (12.8 mmol) Triethylamin zu. Nach 2 h Rühren bei 90°C läßt man auf Raumtemperatur abkühlen und rührt noch 2 h. Die Farbstofflösung wird innerhalb von 45 Minuten in 75 ml Aceton eingetragen. Man läßt über Nacht den Farbstoff auskristallisieren, saugt ab und wäscht gründlich mit Aceton nach. Der Rohfarbstoff wird in 60 ml m-Kresol heiß gelöst, heiß filtriert und mit 180 ml Aceton versetzt. Man läßt den Farbstoff über Nacht auskristallisieren, saugt ab und wäscht gründlich mit Aceton. Nach Trocknen i. Vak. bei 50°C bis zur Gewichtskonstanz erhält man 1.55 g (41 % d. Th.) Farbstoff.

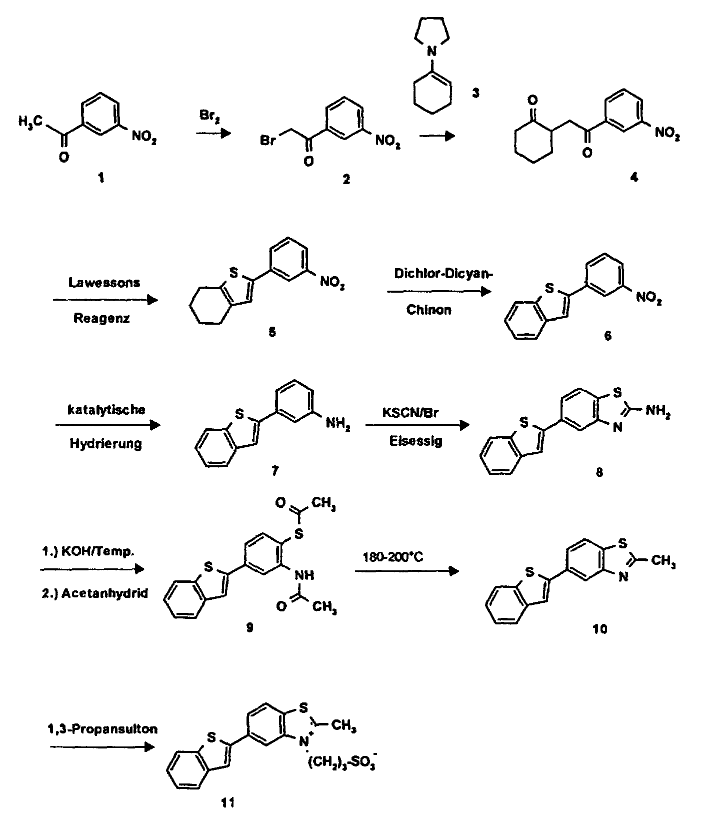

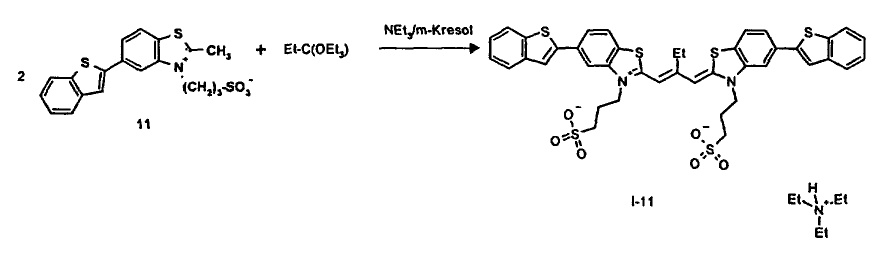

Die Herstellung der erfindungsgemäßen Cyanine gelingt auch durch die Anwendung der Synthesemethoden welche in "THE CYANINE DYES AND RELATED COMPOUNDS" von Frances M. Hamer Interscience Publishers (1964) beschrieben werden.

Mit den erfindungsgemäßen Cyaninfarbstoffen wird nicht nur eine zu hoher spektraler Empfindlichkeit führende, sondern auch eine stabile Sensibilisierung im grünen Spektralbereich zwischen 520 bis 590 nm, im roten Spektralbereich zwischen 590 bis 680 nm bzw. 680 bis 750 nm und im infraroten Spektralbereich erreicht.

Zu noch höherer Empfindlichkeit gelangt man, wenn zu mindestens einem Vertreter der Formel (I) mindestens ein Vertreter der Formel (II) zugemischt werden: 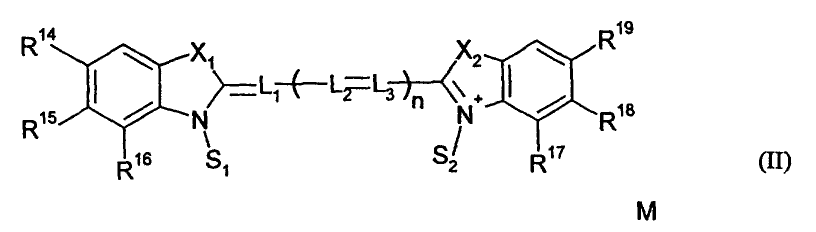 in der
- X₁, X₂: unanhängig voneinander für O, S, Se,CH=CH, C(CH₃)₂ oder NR₇ (R₇ = gegebenenfalls substituiertes Alkyl) stehen,
- S₁, S₂: unabhängig voneinander Alkyl, Sulfoalkyl, Carboxyalkyl, -(CH₂)₁-SO₂-Y-SO₂-Alkyl, -(CH₂)₁-SO₂-Y-CO-Alkyl, -(CH₂)₁-CO-Y-SO₂-Alkyl, -(CH₂)₁-CO-Y-CO-Alkyl (1 = 1-6, Y: NH, N⁻). bedeuten,
- R₁₄, R₁₅, R₁₆, R₁₇, R₁₈, R₁₉: unabhängig voneinander für H, Halogen, bevorzugt Fluor, Chlor, Brom, Alkyl, Alkoxy, Phenyl, 2-Thienyl, 3-Thienyl, 1-Pyrrolyl, 1-Indolyl, 2-Furanyl, 3-Furanyl, CN, CF₃, Aryl; oder R₁₄ zusammen mit R₁₅ oder R₁₅ zusammen mit R₁₆ oder R₁₉ zusammen mit R₁₈ oder R₁₈ zusammen mit R₁₇ die restlichen Glieder zur Vervollständigung eines gegebenenfalls substituierten ankondensierten Benzo- oder Naphthoringsystems stehen,
- n: 0 oder 1 bedeutet,
- L₁, L₂, L₃: unabhängig voneinander für substituierte oder unsubstituierte Methingruppen stehen und
- M: für ein gegebenenfalls zum Ladungsausgleich erforderliches Gegenion steht.

Bevorzugte Beispiele für Verbindungen gemäß Formel (II) sind:

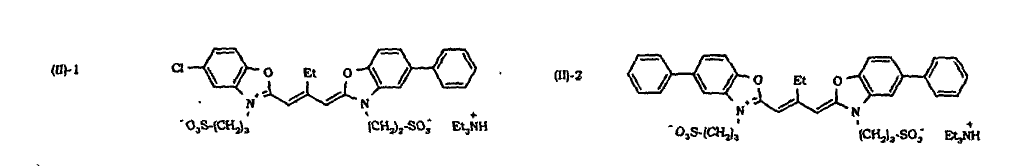

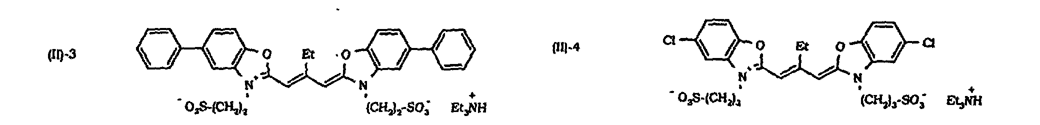

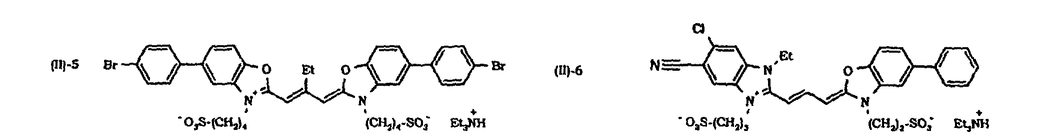

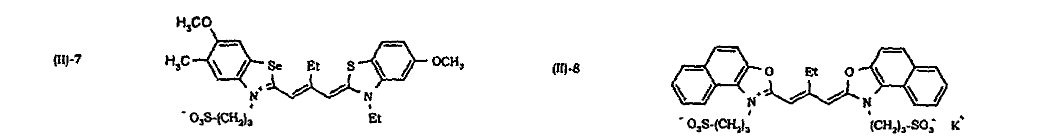

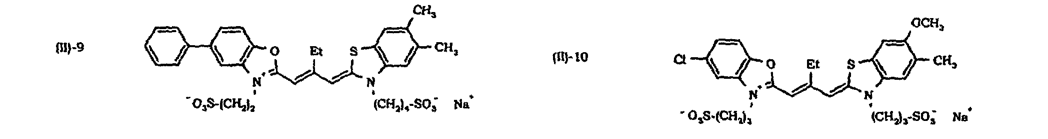

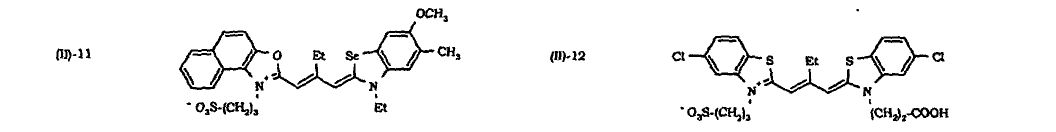

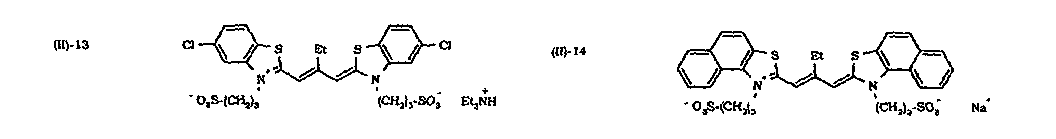

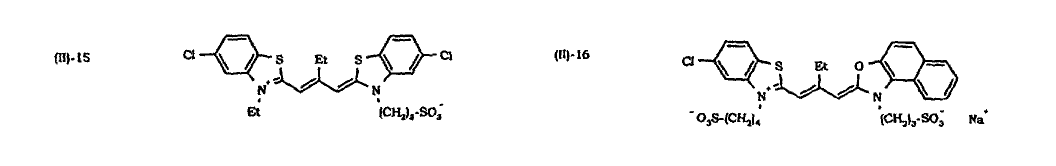

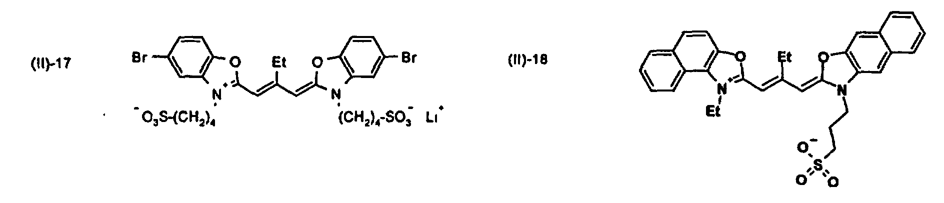

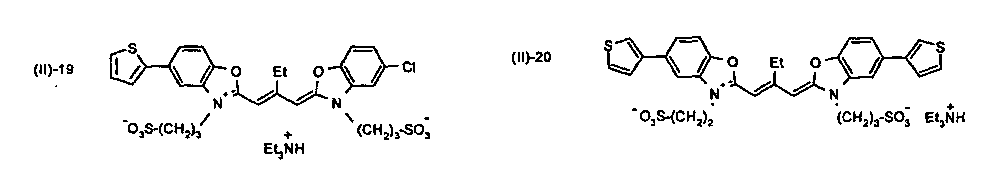

Durch die gemeinsame Verwendung von Verbindungen der Formel (I) und (II) kann eine noch höhere spektrale Empfindlichkeit, bei gleichzeitiger hervorragender Tropenstabilität, erreicht werden. Die Verbindungen (I) und (II) können in einem Mischungsverhältnis von 0,1:10 bis 10:0,1 vorliegen. Besonders bevorzugt ist ein Mischungsverhältnis der Cyaninfarbstoffe der Formel (I) zu denen der Formel (II) von 20:1 bis 1:20.

Gemäß der vorliegenden Erfindung handelt es sich um mindestens eine Verbindung der Formel (I), vorzugsweise setzt man drei Verbindungen der Formel (I) ein. Insbesondere bevorzugt ist, wie zuvor dargestellt eine Abmischung mit Verbindungen der Formel (II). In dieser Abmischung werden vorzugsweise zwei Verbindungen gemäß Formel (I) mit einer Verbindung der Formel (II), oder zwei Verbindungen gemäß Formel (II) mit einer Verbindung der Formel (I) eingesetzt. Insbesondere bevorzugt ist eine Abmischung, bei der die Einzelverbindungen in jeweils gleichen molaren Mengen eingesetzt werden.

Ein weiterer Gegenstand der vorliegenden Erfindung betrifft ein farbfotografisches Material enthaltend Cyaninfarbstoffe gemäß Formel (I), bevorzugt gemeinsam mit Verbindungen der Formel (II). Die Cyaninfarbstoffe können erfindungsgemäß den farbfotografischen Materialien in den üblichen Mengen, beispielsweise von 1 bis 3000, vorzugsweise von 100 bis 2000 und insbesondere von 200 bis 900 µmol/mol AgNO₃ zugegeben werden. Die so erhaltenen farbfotografischen Materialien zeichnen sich durch eine besonders hohe spektrale Empfindlichkeit aus, die auch nach Lagerung unter extremen Bedingungen (Tropenbedingungen) erhalten bleibt.

Unter Tropenbedingungen sind im Sinne der vorliegenden Erfindung Bedingungen mit einer relativen Luftfeuchtigkeit von vorzugsweise 90% sowie bei Temperaturen von vorzugsweise 35°C zu verstehen. Üblicherweise werden die Proben für eine Zeitdauer von 7 Tagen unter den jeweiligen Bedingungen gelagert.

Gegenstand der vorliegenden Erfindung ist weiterhin die Verwendung der Verbindungen der Formel (I) als Spektralsensibilisatoren.

Beispiele für farbfotografische Materialien sind Farbnegativfilme, Farbumkehrfilme, Farbpositivfilme, farbfotografisches Papier, farbumkehrfotografisches Papier, farbempfindliche Materialien für das Farbdiffusionstransfer-Verfahren oder das Silberfarbbleich-Verfahren. Eine Übersicht findet sich in Research Disclosure 37038 (1995) und Research Disclosure 38957 (1996).

Die fotografischen Materialien bestehen aus einem Träger, auf den wenigstens eine lichtempfindliche Silberhalogenidemulsionsschicht aufgebracht ist. Als Träger eignen sich insbesondere dünne Filme und Folien. Eine Übersicht über Trägermaterialien und auf deren Vorder- und Rückseite aufgetragene Hilfsschichten ist in Research Disclosure 37254, Teil 1 (1995), S. 285 und in Research Disclosure 38957, Teil XV (1996), S. 627 dargestellt.

Die farbfotografischen Materialien enthalten üblicherweise mindestens je eine rotempfindliche, grünempfindliche und blauempfindliche Silberhalogenidemulsionsschicht sowie gegebenenfalls Zwischenschichten und Schutzschichten.

Je nach Art des fotografischen Materials können diese Schichten unterschiedlich angeordnet sein. Dies sei fiir die wichtigsten Produkte dargestellt:

Farbfotografische Filme wie Colornegativfilme und Colorumkehrfilme weisen in der nachfolgend angegebenen Reihenfolge auf dem Träger 2 oder 3 rotempfindliche, blaugrünkuppelnde Silberhalogenidemulsionsschichten, 2 oder 3 grünempfindliche, purpurkuppelnde Silberhalogenidemulsionsschichten und 2 oder 3 blauempfindliche, gelbkuppelnde Silberhalogenidemulsionsschichten auf. Die Schichten gleicher spektraler Empfindlichkeit unterscheiden sich in ihrer fotografischen Empfindlichkeit, wobei die weniger empfindlichen Teilschichten in der Regel näher zum Träger angeordnet sind als die höher empfindlichen Teilschichten.

Zwischen den grünempfindlichen und blauempfindlichen Schichten ist üblicherweise eine Gelbfilterschicht angebracht, die blaues Licht daran hindert, in die darunter liegenden Schichten zu gelangen.

Die Möglichkeiten der unterschiedlichen Schichtanordnungen und ihre Auswirkungen auf die fotografischen Eigenschaften werden in J. Inf. Rec. Mats., 1994, Vol. 22, Seiten 183 - 193 und in Research Disclosure 38957 Teil XI (1996), S. 624 beschrieben.

Farbfotografisches Papier, das in der Regel wesentlich weniger lichtempfindlich ist als ein farbfotografischer Film, weist in der nachfolgend angegebenen Reihenfolge auf dem Träger üblicherweise je eine blauempfindliche, gelbkuppelnde Silberhalogenidemulsionsschicht, eine grünempfindliche, purpurkuppelnde Silberhalogenidemulsionsschicht und eine rotempfindliche, blaugrünkuppelnde Silberhalogenidemulsionsschicht auf; die Gelbfilterschicht kann entfallen.

Abweichungen von Zahl und Anordnung der lichtempfindlichen Schichten können zur Erzielung bestimmter Ergebnisse vorgenommen werden. Zum Beispiel können alle hochempfindlichen Schichten zu einem Schichtpaket und alle niedrigempfindlichen Schichten zu einem anderen Schichtpaket in einem fotografischen Film zusammengefaßt sein, um die Empfindlichkeit zu steigern (DE-25 30 645).

Wesentliche Bestandteile der fotografischen Emulsionsschichten sind Bindemittel, Silberhalogenidkörner und Farbkuppler.

Angaben über geeignete Bindemittel finden sich in Research Disclosure 37254, Teil 2 (1995), S. 286 und in Research Disclosure 38957, Teil II.A (1996), S. 598.

Angaben über geeignete Silberhalogenidemulsionen, ihre Herstellung, Reifung, Stabilisierung und spektrale Sensibilisierung einschließlich im Sinne der vorliegenden Erfindung neben den erfindungsgemäßen Cyaninfarbstoffen zu verwendende Spektralsensibilisatoren finden sich in Research Disclosure 37254, Teil 3 (1995), S. 286, in Research Disclosure 37038, Teil XV (1995), S. 89 und in Research Disclosure 38957, Teil V.A (1996), S. 603.

Im Sinne der vorliegenden Erfindung handelt es sich bei den verwendeten Emulsionen in einer bevorzugten Ausführungsformen um *Tab-Grain Emulsionen.* Darunter sind Emulsionen mit tafelförmigen Silberhalogenidkristallen, mit einem Aspektverhältnis >2 zu verstehen, wobei das Aspektverhältnis das Verhältnis des Durchmessers des flächengleichen Kreises der Projektionsfläche zur Dicke des Kristalls ist.

Fotografische Materialien mit Kameraempfindlichkeit enthalten üblicherweise Silberbromidiodidemulsionen, die gegebenenfalls auch geringe Anteile Silberchlorid enthalten können. Fotografische Kopiermaterialien enthalten entweder Silberchloridbromidemulsionen mit bis 80 Mol-% AgBr oder Silberchloridbromidemulsionen mit über 90 Mol-% AgCI, beispielsweise sogar mehr als 95 Mol-%, mehr als 98 Mol-% oder sogar mehr als 99 Mol-%, bis 100 Mol-% AgCl.

Angaben zu den Farbkupplern finden sich in Research Disclosure 37254, Teil 4 (1995), S. 288, in Research Disclosure 37038, Teil II (1995), S. 80 und in Research Disclosure 38957, Teil X.B (1996), S. 616. Die maximale Absorption der aus den Kupplern und dem Farbentwickleroxidationsprodukt gebildeten Farbstoffe liegt vorzugsweise in den folgenden Bereichen: Gelbkuppler 430 bis 460 nm, Purpurkuppler 540 bis 560 nm, Blaugrünkuppler 630 bis 700 nm.

In farbfotografischen Filmen werden zur Verbesserung von Empfindlichkeit, Körnigkeit, Schärfe und Farbtrennung häufig Verbindungen eingesetzt, die bei der Reaktion mit dem Entwickleroxidationsprodukt Verbindungen freisetzen, die fotografisch wirksam sind, z.B. DIR-Kuppler, die einen Entwicklungsinhibitor abspalten.

Angaben zu solchen Verbindungen, insbesondere Kupplern, finden sich in Research Disclosure 37254, Teil 5 (1995), S. 290, in Research Disclosure 37038, Teil XIV (1995), S. 86 und in Research Disclosure 38957, Teil X.C (1996), S. 618.

Die meist hydrophoben Farbkuppler, aber auch andere hydrophobe Bestandteile der Schichten, werden üblicherweise in hochsiedenden organischen Lösungsmitteln gelöst oder dispergiert. Diese Lösungen oder Dispersionen werden dann in einer wäßrigen Bindemittellösung (üblicherweise Gelatinelösung) emulgiert und liegen nach dem Trocknen der Schichten als feine Tröpfchen (0,05 bis 0,8 µm Durchmesser) in den Schichten vor.

Geeignete hochsiedende organische Lösungsmittel, Methoden zur Einbringung in die Schichten eines fotografischen Materials und weitere Methoden, chemische Verbindungen in fotografische Schichten einzubringen, finden sich in Research Disclosure 37254, Teil 6 (1995), S. 292.

Die in der Regel zwischen Schichten unterschiedlicher Spektralempfindlichkeit angeordneten nicht lichtempfindlichen Zwischenschichten können Mittel enthalten, die eine unerwünschte Diffusion von Entwickleroxidationsprodukten aus einer lichtempfindlichen in eine andere lichtempfindliche Schicht mit unterschiedlicher spektraler Sensibilisierung verhindern.

Geeignete Verbindungen (Weißkuppler, Scavenger oder EOP-Fänger) finden sich in Research Disclosure 37254, Teil 7 (1995), S. 292, in Research Disclosure 37038, Teil III (1995), S. 84 und in Research Disclosure 38957, Teil X.D (1996), S. 621 ff.

Das fotografische Material kann weiterhin UV-Licht absorbierende Verbindungen, Weißtöner, Abstandshalter, Filterfarbstoffe, Formalinfänger, Lichtschutzmittel, Antioxidantien, D_{Min}-Farbstoffe, Weichmacher (Latices), Biocide und Zusätze zur Verbesserung der Kuppler- und Farbstoffstabilität, zur Verringerung des Farbschleiers und zur Verringerung der Vergilbung und anderes enthalten. Geeignete Verbindungen finden sich in Research Disclosure 37254, Teil 8 (1995), S. 292, in Research Disclosure 37038, Teile IV, V, VI, VII, X, XI und XIII (1995), S. 84 ff und in Research Disclosure 38957, Teile VI, VIII, IX und X (1996), S. 607 und 610 ff.

Die Schichten farbfotografischer Materialien werden üblicherweise gehärtet, d.h., das verwendete Bindemittel, vorzugsweise Gelatine, wird durch geeignete chemische Verfahren vernetzt.

Geeignete Härtersubstanzen finden sich in Research Disclosure 37254, Teil 9 (1995), S. 294, in Research Disclosure 37038, Teil XII (1995), Seite 86 und in Research Disclosure 38957, Teil II.B (1996), S. 599.

Nach bildmäßiger Belichtung werden farbfotografische Materialien ihrem Charakter entsprechend nach unterschiedlichen Verfahren verarbeitet. Einzelheiten zu den Verfahrensweisen und dafür benötigte Chemikalien sind in Research Disclosure 37254, Teil 10 (1995), S. 294, in Research Disclosure 37038, Teile XVI bis XXIII (1995), S. 95 ff und in Research Disclosure 38957, Teile XVIII, XIX und XX (1996), S. 630 ff zusammen mit exemplarischen Materialien veröffentlicht.

### Beispiele

### Beispiel 1

### Rohemulsion

Eine Lösung von 144 g Inertgelatine und 107 g Kaliumbromid in 18 kg Wasser wurde unter Rühren vorgelegt. Bei 30°C wurde eine wäßrige Silbernitratlösung (47 g Silbernitrat in 550 g Wasser) und eine wäßrige Halogenidlösung (33 g Kaliumbromid in 550 g Wasser) als Doppeleinlauf innerhalb von 30 Sekunden zudosiert. Darauf folgte die Zugabe von 395 g Inertgelatine in 4 kg Wasser. Nach Erhitzen auf 74°C wurde innerhalb von 20 Minuten eine wäßrige Silbernitratlösung (114 g Silbernitrat in 1,4 kg Wasser) zugegeben.

Der zweite Doppeleinlauf erfolgte danach ebenfalls bei 74°C. Dabei wurden eine wäßrige Silbernitratlösung (1339 g Silbernitrat in 8,3 kg Wasser) und eine wäßrige Halogenidlösung (1117 g Kaliumbromid in 9,8 kg Wasser) innerhalb von 50 Minuten mit steigender Dosierrate zudosiert. Die Dosierrate wurde dabei von anfänglich 70 mL/Minute in 10 Schritten bis auf 400 mL/Minute erhöht. Während des Einlaufs wurde der pBr-Wert von 2,3 im Dispersionsmedium konstant gehalten.

Nach dem letzten Einlauf wurde die Emulsion auf 25°C abgekühlt, bei pH 3,5 durch Zugabe von Polystyrolsulfonsäure geflockt und anschließend bei 20°C gewaschen. Danach wurde das Flockulat mit Wasser redispergiert auf 7,5 kg aufgefüllt und bei pH 6,5 sowie einer Temperatur von 50°C redispergiert.

Die Emulsion enthielt mit einem Anteil von über 80 % (bezogen auf die Projektionsfläche der Kristalle) hexagonale Plättchen mit einem Aspektverhältnis (mittlerer Durchmesser des flächengleichen Kreises der Projektionsfläche/Dicke der Plättchen) von 8 und einem Nachbarkantenverhältnis von 1:1 bis 1,5:1. Die Korngröße betrug 0,55 µm und die Verteilungsbreite 18 %.

Die Silberhalogenidemulsion wurde bei 55°C, pAg 7,4 und pH 6,5 mit 5,0 µmol Tetrachlorgoldsäure, 690 µmol Kaliumthiocyanat und 20 µmol Natriumthiosulfat pro Mol AgNO₃ chemisch gereift.

Die Emulsion wurde spektral sensibilisiert, indem zu der 40°C warmen Emulsion nach Zugabe von 350 µmol 4-Hydroxy-6-methyl-1,3,3a,7-tetraazainden pro 100 g AgNO₃ jeweils 500 µmol spektraler Sensibilisator pro Mol AgNO₃ gelöst in Methanol oder einem Gemisch aus Methanol/Phenoxyethanol zugegeben wurde und danach noch 20 Minuten bei 40°C gerührt wurde.

Bei Einsatz von Sensibilisatorengemischen ist die Summe jeweils auf 500 µmol/mol, AgNO₃ normiert. Der in den Tabellen 5 und 6 zuerst genannnte Sensibilisator wurde auch der Emulsion zuerst zugesetzt, nach 20 Minuten Rühren bei 40°C wurde der zweite Sensibilisator zugegeben und gegebenenfalls nach weiteren 20 Minuten bei 40°C der Dritte.

Die Emulsion wurde mit einem Emulgat des Blaugrünkupplers BG-1 und einem Emulgat des Blaugrünkupplers BG-2 versetzt und auf einem 120 µm starken Schichtträger aus substriertem Celluloseacetat aufgetragen.

Die vergossenen Einzelschichten enthielten pro m²:
- AgBr entsprechend: 0,63 g AgNO₃
1,38 g Gelatine
0,25 g Blaugrünkuppler BG-1
0,37 g Blaugrünkuppler BG-2
0,62 g Trikresylphosphat

Das Material wurde durch Auftragen einer Schutzschicht aus 0,2 g Gelatine und 0,3 g Soforthärtungsmittel (H-1) pro m² gehärtet.

Von den so hergestellten Materialien wurden die Empfindlichkeiten bestimmt. Hierzu wurden Proben der Materialien hinter einem Verlaufskeil belichtet und einer Colornegativverarbeitung gemäß "The Journal of Photographic Science 1974, Seiten 597, 598" unterworfen. Die Ergebnisse sind in den Tabellen 1 bis 3 aufgeführt.

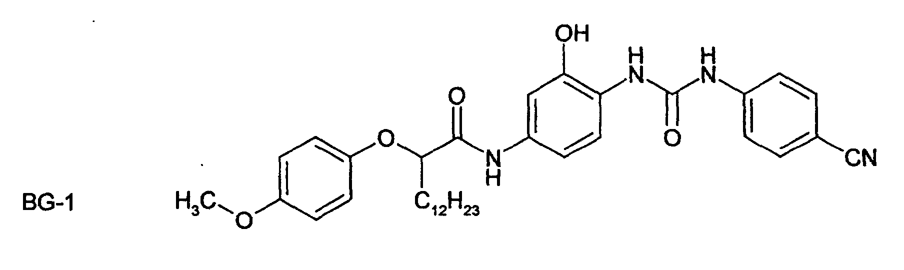

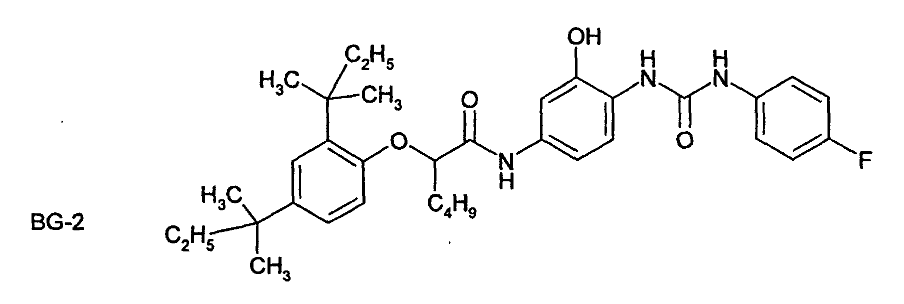

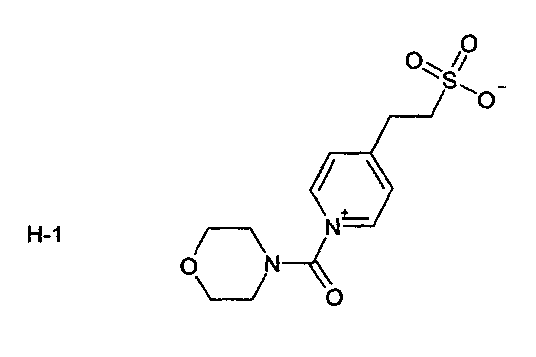

**Tabelle 1:**

| **spektrale Sensibilisatoren** | **Empfindlichkeit*** | **Probenart** |
|---|---|---|
| I-1 | 0,97 | Erfindung |
| I-17 | 1,00 | Erfindung |
| V-1 | 0,91 | Vergleich |
| V-2 | 0,88 | Vergleich |
| V-3 | 0,90 | Vergleich |

| | | |
|---|---|---|
| * Empfindlichkeit auf die von I-17 normiert. | | |

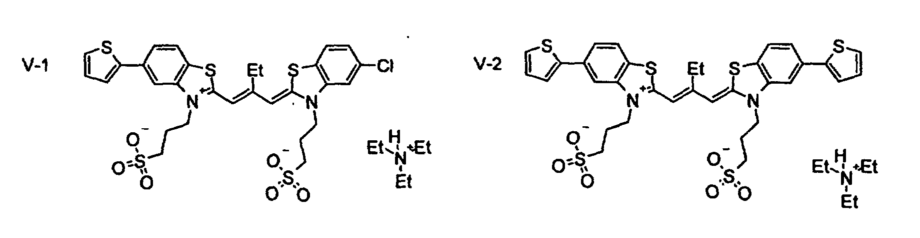

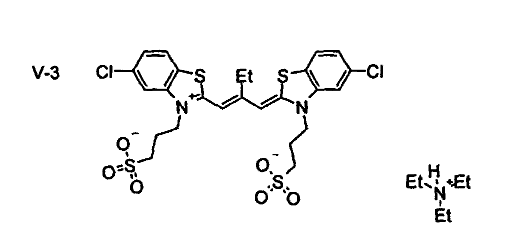

**Tabelle 2:**

| **spektrale Sensibilisatorenmischung** | **Mischungsverhältnis** | **Empfindlichkeit*** | **Probenart** |
|---|---|---|---|
| II-9/I-1 | 1/1 | 0,95 | Erfindung |
| Il-9/I-17 | 1/2 | 1,00 | Erfindung |
| II-9/V-1 | 1/1 | 0,86 | Vergleich |
| II-9/V-2 | 1/2 | 0,92 | Vergleich |
| II-9/V-3 | 1/2 | 0,93 | Vergleich |

| | | | |
|---|---|---|---|
| *Empfindlichkeit auf die Kombination II-9/I-17 normiert. | | | |

**Tabelle 3:**

| **spektrale Sensibilisatorenmischung** | **Mischungsverhältnis** | **Empfindlichkeit*** | **Probenart** |
|---|---|---|---|
| II-9/I-1/II-14 | 2/6/1 | 1,00 | Erfindung |
| II-9/I-17/II-14 | 2/5/0,2 | 0,98 | Erfindung |
| II-9/V-1/II-14 | 2/6/1 | 0,89 | Vergleich |
| II-9/V-2/II-14 | 2/5/0,2 | 0,90 | Vergleich |
| II-9/V-3/II-14 | 2/6/1 | 0,93 | Vergleich |

| | | | |
|---|---|---|---|
| * Die Empfindlichkeit ist auf die der Kombination II-9/I-1/II-14 normiert. | | | |

### Beispiel 2

Die Bereitung der fotografischen Rohemulsion, deren Reifung und spektrale Sensibilisierung erfolgte analog zu Beispiel 1, mit dem Unterschied, daß statt der Mischung der Blaugrünkuppler BG-1 und BG-2 der Purpurkuppler M-1 verwendet wurde.

Die vergossenen Einzelschichten enthielten pro m²:
- AgBr entsprechend: 0,63 g AgNO₃
1,38 g Gelatine
0,95 g Purpurkuppler M-1
0,29 g Trikresylphosphat.

Das Material wurde durch Auftragen einer Schutzschicht aus 0.2 g Gelatine und 0.3 g Soforthärtungsmittel (H-1) pro m² gehärtet.

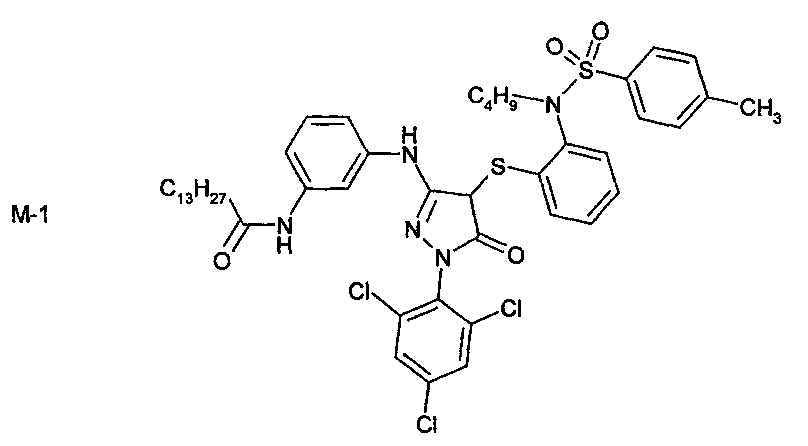

Von den so hergestellten Materialien wurden die Empfindlichkeiten bestimmt. Hierzu wurden Proben der Materialien hinter einem Verlaufskeil belichtet und einer Colornegativverarbeitung gemäß "The Journal of Photographic Science 1974, Seiten 597,598" unterworfen. Die Ergebnisse sind in den Tabellen 4 und 5 aufgeführt.

**Tabelle 4:**

| **spektraler Sensibilisator** | **Empfindlichkeit*** | **Probenart** |
|---|---|---|
| I-4 | 0,97 | Erfindung |
| 1-5 | 1,00 | Erfindung |
| V-3 | 0,91 | Vergleich |
| V-4 | 0,90 | Vergleich |

| | | |
|---|---|---|
| * Die Empfindlichkeit ist auf die von I-5 normiert. | | |

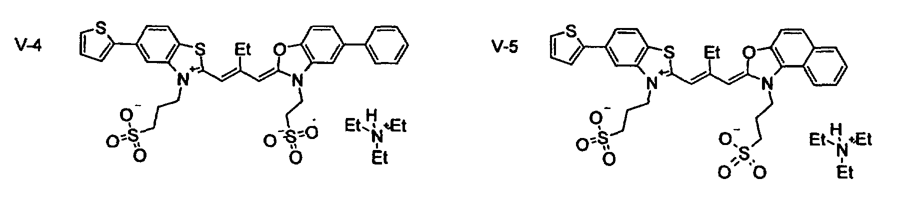

**Tabelle 5:**

| **Spektrale Sensibilisatoren** | **Mischungsverhältnis** | **Empfindlichkeiten*** | **Probenart** |
|---|---|---|---|
| (II)-1/(II)-18/(I)-4 | 10/3/1 | 0,99 | Erfindung |
| (II)-1/(II)-18/(I)-5 | 10/3/1 | 1,00 | Erfindung |
| (II)-1/(II)-18/V-4 | 10/3/1 | 0,89 | Vergleich |
| (II)-1/(II)-18/V-5 | 10/3/1 | 0,88 | Vergleich |

| | | | |
|---|---|---|---|
| * Die Empfindlichkeit ist auf die Kombination von (II)-1/(II)-18/(I)-5 normiert. | | | |

### Beispiel 3

### Emulsionsbereitung und Sensibilisierung

Es wurden die folgenden Lösungen jeweils mit demineralisiertem Wasser angesetzt:

| | | |
|---|---|---|
| Lösung 1 | 4 000 g | Wasser |
| | 500 g | Gelatine |
| | | |
| Lösung 2 | 6 700 g | Wasser |
| | 1 300 g | NaCl |
| | 0,4 mg | K₂IrCl₆ |
| | 0,2 mg | Na₃RhCl₆ |
| | | |
| Lösung 3 | 6 500 g | Wasser |
| | 3 600 g | AgNO₃ |

Lösung 2 und 3 wurden bei 45°C im Lauf von 70 Minuten bei einem pAg von 7,7 gleichzeitig unter intensivem Rühren zur Lösung 1 gegeben. Man erhielt eine Silberchloridemulsion mit einem mittleren Teilchendurchmesser von 0,5 µm. Das Gelatine/AgNO₃-Gewichtsverhältnis betrug 0,14. Die Emulsion wurde in bekannter Weise ultrafiltriert, gewaschen und mit so viel Gelatine redispergiert, daß das Gelatine/AgNO₃-Gewichtsverhältnis 0,56 betrug. Der Silberhalogenidgehalt betrug pro kg Emulsion 1,5 Mol. Die Emulsion wurde bei einem pH-Wert von 5,3 unter Rühren mit 18 µmol Gold(III)chlorid/Mol AgNO₃ und 7 µmol Na₂S₂O₃/Mol AgNO₃ versetzt. Nach 5 Minuten wurden 200 mg der Verbindung A zugesetzt und anschließend 3 h bei 70°C unter Rühren gereift. Nach Abkühlen auf 50°C wurde durch Zugabe von 50 µmol spektralem Sensibilisator pro Mol AgNO₃ (gelöst in Methanol, 0,1-%-ige Lösung) spektral sensibilisiert und durch Zugabe von 2 g B/kg AgNO₃ stabilisiert.

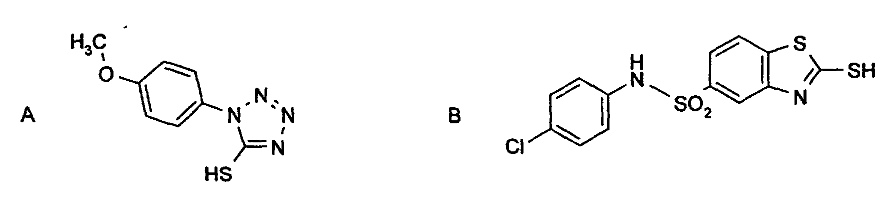

Es wurde ein fotographisches Aufzeichnungsmaterial mit folgenden Schichten auf einem polyethylenbeschichteten Papierträger hergestellt:

| 1.) | Schicht (rotempfindlich, blaugrünkuppelnd) | |
|---|---|---|
| | Emulsion | 0,30 g/m² AgNO₃ |
| | Blaugrünkuppler K-BG | 0,42 g/m² |
| | Trikresylphosphat | 0,42 g/m² |
| | | |

| 2.) | Schutzschicht | |
|---|---|---|
| | Gelatine | 1,60 g/m² |
| | | |

| 3.) | Härtungsschicht | |
|---|---|---|
| | Härtungsmittel H | 0,20 g/m² |

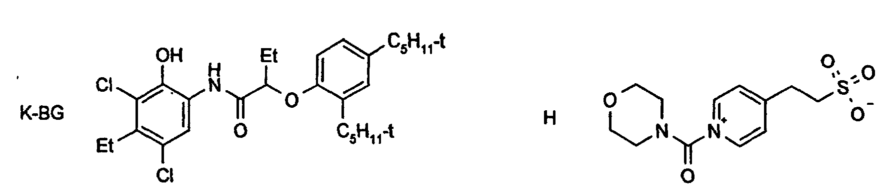

Das Material wurde durch einen Stufenkeil 40 ms belichtet und im Prozeß AP 94, wie folgt, verarbeitet.

| Farbentwickler-45 s-35°C | |
|---|---|
| Triethanolamin | 9,0 g |
| N, N-Diethylenhydroxylamin | 4,0 g |
| Diethylenglykol | 0,05 g |
| 3-Methyl-4-amino-N-ethyl-N-methansulfonamidoethyl-anilin-sulfat | 5,0 g |
| Kaliumsulfit | 0,2 g |
| Triethylenglykol | 0,05 g |
| Kaliumcarbonat | 22 g |
| Kaliumhydroxyd | 0,4 g |
| Ethylendiamintetraessigsäure-di-Na-Salz | 2,2 g |
| Kaliumchlorid | 2,5 g |
| 1,2-Dihydroxybenzol-3,4,6-trisulfonsäure-Na-Salz | 0,3 g |
| auffüllen mit Wasser auf 1000 ml (pH = 10,0) | |

| Bleichfixierbad-45 s-35°C | |
|---|---|
| Ammoniumthiosulfat | 75 g |
| Natriumhydrogensulfit | 13,5 g |
| Ammoniumacetat | 2,0 g |
| Ethylendiamintetraessigsäure (Eisen-Ammoniumsalz) | 57 g |
| Ammoniak 25 %ig | 9,5 g |
| auffüllen mit Essig auf 1000 ml (pH = 5,5) | |

Wässern: 2 Min-33°C

### Trocknen

Von den so hergestellten Materialien wurde die Rotempfindlichkeiten bestimmt. Die Werte sind in der Tabelle aufgeführt.

**Tabelle:**

| **Farbstoff** | **Empfindlichkeit*** | **Probenart** |
|---|---|---|
| I-19 | 1,00 | Erfindung |
| I-23 | 0,96 | Erfindung |
| V-6 | 0,90 | Vergleich |
| V-7 | 0,93 | Vergleich |
| V-8 | 0.91 | Vergleich |

| | | |
|---|---|---|
| *Empfindlichkeit auf die von I-19 normiert. | | |

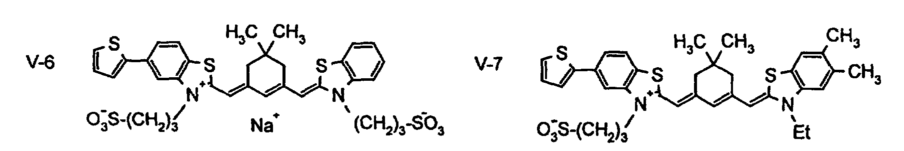

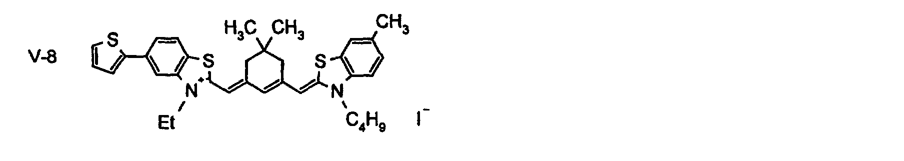

## Patentansprüche

1. Cyaninfarbstoffen gemäß Formel (I) 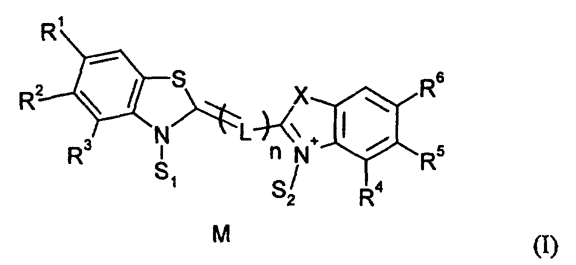 in der
R¹, R², R³,R⁴, R⁵, R⁶ unabhängig voneinander H, einen Substituenten oder R⁵ zusammen mit R⁶ oder R⁴ zusammen mit R⁵ die restlichen Glieder zur Vervollständigung eines gegebenenfalls substituierten ankondensierten Benzoringes oder Naphthoringsystems, bedeuten, mit der Maßgabe, daß mindestens einer der Substituenten R¹, R² oder R³ ein Benzthienylsubstituent ist,
X für O, S, Se,CH=CH, C(CH₃)₂ oder NR₇ (R₇ = gegebenenfalls substituiertes Alkyl) steht,
S₁, S₂ unabhängig voneinander Alkyl, Sulfoalkyl, Carboxyalkyl, -(CH₂)₁-SO₂-Y-SO₂-Alkyl, -(CH₂)₁-SO₂-Y-CO-Alkyl, -(CH₂)₁-CO-Y-SO₂-Alkyl, -(CH₂)₁NHSO⁻₃, -(CH₂)₁N(Alkyl)SO⁻₃, -(CH₂)₁N(Aryl)SO⁻₃, -(CH₂)₁-CO-Y-CO-Alkyl bedeuten, mit der Maßgabe, daß 11 bis 6 und Y NH oder N bedeuten,
n 3, 5 oder 7 bedeutet,
L für substituierte oder unsubstituierte Methingruppen, die Bestandteile eines oder mehrerer carbocyclischer Ringe sein können, und
M für ein gegebenenfalls zum Ladungsausgleich erforderliches Gegenion stehen.

2. Farbfotografisches Silberhalogenidmaterial enthaltend mindestens eine lichtempfindliche Silberhalogenidemulsion, **dadurch gekennzeichnet, daß** es mindestens einen Cyaninfarbstoff der Formel (I) 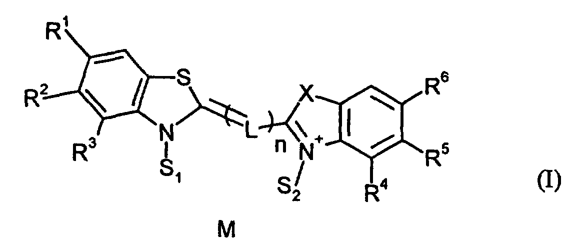 in der
R¹, R², R³, R⁴, R⁵, R⁶ unabhängig voneinander H,einen Substituenten oder R⁵ zusammen mit R⁶ oder R⁴ zusammen mit R⁵ die restlichen Glieder zur Vervollständigung eines gegebenenfalls substituierten ankondensierten Benzoringes oder Naphthoringsystems, bedeuten, mit der Maßgabe, daß mindestens einer der Substituenten R¹, R² oder R³ ein Benzthienylsubstituent ist,
X für O, S, Se,CH=CH, C(CH₃)₂ oder NR₇ (R₇ = gegebenenfalls substituiertes Alkyl) steht,
S₁,S₂ unabhängig voneinander Alkyl, Sulfoalkyl, Carboxyalkyl -(CH₂)₁-SO₂-Y-SO₂-Alkyl, -(CH₂)₁-SO₂-Y-CO-Alkyl, -(CH₂)₁NHSO⁻₃, -(CH₂)₁N(Alkyl)SO⁻₃, -(CH₂)₁N(Aryl)SO⁻₃, -(CH₂)₁-CO-Y-CO-Alkyl bedeuten, mit der Maßgabe, daß l 1 bis 6 und Y NH oder N⁻ bedeuten.
n 3, 5 oder 7 bedeutet,
L für substituierte oder unsubstituierte Methingruppen, die Bestandteile eines oder mehrerer carbocyclischer Ringe sein können, und
M für ein gegebenenfalls zum Ladungsausgleich erforderliches Gegenion stehen,
enthält.

3. Farbfotografisches Silberhalogenidmaterial nach Anspruch 2, **dadurch gekennzeichnet, daß** es zusätzlich mindestens einen Cyaninfarbstoff der Formel (II) 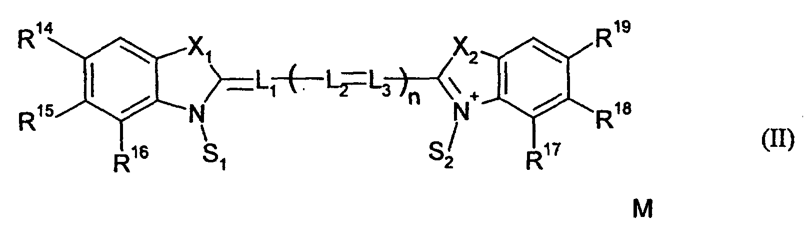 in der
X₁, X₂ unabhängig voneinander für O, S, Se,CH=CH, C(CH₃)₂ oder NR₇ (R₇ = gegebenenfalls substituiertes Alkyl) stehen,
S₁, S₂ unabhängig voneinander Alkyl, Sulfoalkyl, Carboxyalkyl, -(CH₂)₁-SO₂-Y-SO₂-Alkyl, -(CH₂)₁-SO₂-Y-CO-Alkyl, -(CH₂)₁-CO-Y-SO₂-Alkyl, -(CH₂)₁-CO-Y-CO-Alkyl (1=1-6, Y: NH, N⁻). bedeuten,
R¹⁴, R¹⁵, R¹⁶, R¹⁷, R¹⁸, R¹⁹ unabhängig voneinander für H, Halogen, bevorzugt Fluor, Chlor, Brom, Alkyl, Alkoxy, Phenyl, 2-Thienyl, 3-Thienyl, 1-Pyrrolyl, 1-Indolyl, 2-Furanyl, 3-Furanyl, CN, CF₃, Aryl; oder R¹⁴ zusammen mit R¹⁵ oder R¹⁵ zusammen mit R¹⁶ oder R¹⁹ zusammen mit R¹⁸ oder R¹⁸ zusammen mit R¹⁷ die restlichen Glieder zur Vervollständigung eines gegebenenfalls substituierten ankondensierten Benzo- oder Naphthoringsystems stehen,
n 0 oder 1 bedeutet,
L₁, L₂, L₃ unabhängig voneinander für substituierte oder unsubstituierte Methingruppen stehen und
M für ein gegebenenfalls zum Ladungsausgleich erforderliches Gegenion steht,
enthält.

4. Farbfotografisches Silberhalogenidmaterial nach einem der Ansprüche 2 und 3, **dadurch gekennzeichnet, daß** die Cyaninfarbstoffen gemäß der Formeln (I) und (II) in einem Mischungsverhältnis von 0,1:10 bis 10:0,1 vorliegen.

5. Farbfotografisches Silberhalogenidmaterial nach einem der Ansprüche 2 bis 4, **dadurch gekennzeichnet, daß** ein Cyaninfarbstoffe gemäß Formeln (I) mit zwei Cyaninfarbstoffen gemäß Formel (11) eingesetzt wird.

6. Farbfotografisches Silberhalogenidmaterial nach einem der Ansprüche 2 bis 4, **dadurch gekennzeichnet, daß** ein Cyaninfarbstoff gemäß Formel (II) mit zwei Cyaninfarbstoffen gemäß Formel (I) eingesetzt wird.

7. Farbfotografisches Silberhalogenidmaterial nach einem der Ansprüche 2 bis 6, **dadurch gekennzeichnet, daß** es Tab-Grain Emulsionen enthält.

8. Verwendung von Verbindungen der Formel (I) als Spektralsensibilisatoren in farbfotografischen Silberhalogenidmaterialien.

## Claims

1. Cyanine dyes of the formula (I) 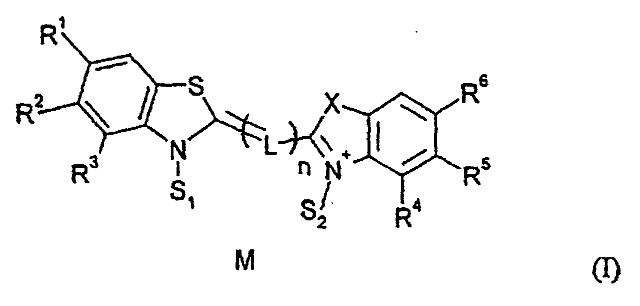 in which
R¹, R², R³, R⁴, R⁵, R⁶ mutually independently mean H, a substituent or R⁵ together with R⁶ or R⁴ together with R⁵ mean the remaining members to complete an optionally substituted fused benzo ring or naphtho ring system, providing that at least one of the substituents R¹, R² or R³ is a benzothienyl substituent,
X denotes O, S, Se, CH=CH, C(CH₃)₂ or NR₇ (R₇ = optionally substituted alkyl),
S₁, S₂ mutually independently mean alkyl, sulphoalkyl, carboxyalkyl, -(CH₂)₁-SO₂-Y-SO₂-alkyl, - (CH₂)₁-SO₂-Y-CO-alkyl, -(CH₂)₁-CO-Y-SO₂-alkyl, -(CH₂)₁NHSO⁻₃, -(CH₂)₁N(alkyl)SO⁻₃, -(CH₂)₁N(aryl)SO⁻₃, -(CH₂)₁-CO-Y-CO-alkyl, providing that 1 means 1 to 6 and Y means NH or N⁻,
n means 3, 5 or 7,
L denotes substituted or unsubstituted methine groups, which may be constituents of one or more carbocyclic rings, and
M denotes a counterion optionally necessary to equalise charges.

2. Colour photographic silver halide material containing at least one photosensitive silver halide emulsion, **characterized in that** it contains at least one cyanine dye of the formula (I) 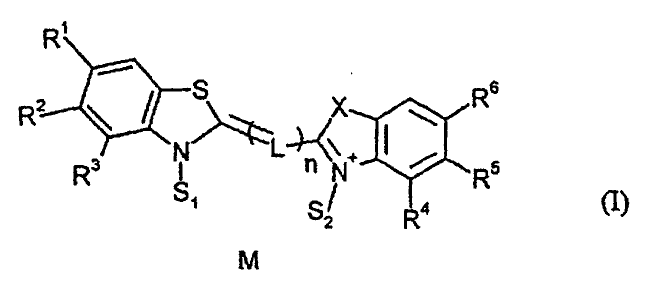 in which
R¹, R², R³, R⁴, R⁵, R⁶ mutually independently mean H, a substituent or R⁵ together with R⁶ or R⁴ together with R⁵ mean the remaining members to complete an optionally substituted fused benzo ring or naphtho ring system, providing that at least one of the substituents R¹, R² or R³ is a benzothienyl substituent,
X denotes O, S, Se, CH=CH, C(CH₃)₂ or NR₇ (R₇ = optionally substituted alkyl),
S₁, S₂ mutually independently mean alkyl, sulphoalkyl, carboxyalkyl, -(CH₂)₁-SO₂-Y-SO₂-alkyl, - (CH₂)₁-SO₂-Y-CO-alkyl, -(CH₂)₁NHSO⁻₃, -(CH₂)₁N(alkyl)SO⁻₃, -(CH₂)₁N(aryl)SO⁻₃, -(CH₂)₁-CO-Y-CO-alkyl, providing that l means 1 to 6 and Y means NH or N⁻,
n means 3, 5 or 7,
L denotes substituted or unsubstituted methine groups, which may be constituents of one or more carbocyclic rings, and
M denotes a counterion optionally necessary to equalise charges.

3. Colour photographic silver halide material according to claim 2, **characterized in that** it additionally contains at least one cyanine dye of the formula (II) 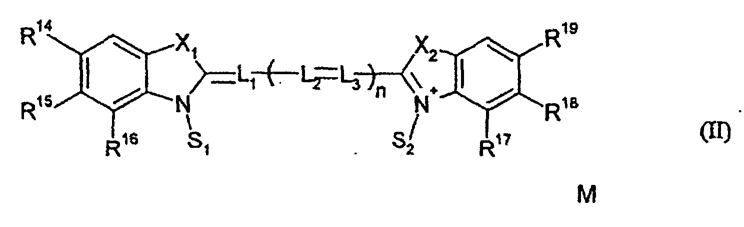 in which
X₁, X₂ mutually independently denote O, S, Se, CH=CH, C(CH₃)₂ or NR₇ (R₇ = optionally substituted alkyl),
S₁, S₂ mutually independently mean alkyl, sulphoalkyl, carboxyalkyl, - (CH₂)₁-SO₂-Y-SO₂-alkyl, -(CH₂)₁-SO₂-Y-CO-alkyl, -(CH₂)₁-CO-Y-SO₂-alkyl, -(CH₂)₁-CO-Y-CO-alkyl (l=1-6, Y: NH, N⁻),
R¹⁴, R¹⁵, R¹⁶, R¹⁷, R¹⁸ and R¹⁹ mutually independently denote H, halogen, preferably fluorine, chlorine, bromine, alkyl, alkoxy, phenyl, 2-thienyl, 3-thienyl, 1-pyrrolyl, 1-indolyl, 2-furanyl, 3-furanyl, CN, CF₃, aryl; or R¹⁴ together with R¹⁵ or R¹⁵ together with R¹⁶ or R¹⁹ together with R¹⁸ or R¹⁸ together with R¹⁷ denote the remaining members to complete an optionally substituted fused benzo or naphtho ring system,
n means 0 or 1,
L₁, L₂, L₃ mutually independently denote substituted or unsubstituted methine groups and
M denotes a counterion optionally necessary to equalize charges.

4. Colour photographic silver halide material according to either of claims 2 and 3, **characterized in that** the cyanine dyes according to the formulae (I) and (II) are present in a mixture ratio of 0.1:10 to 10:0.1.

5. Colour photographic silver halide material according to any of claims 2 to 4, **characterized in that** one cyanine dye according to the formula (I) is used with two cyanine dyes according to the formula (II).

6. Colour photographic silver halide material according to any of claims 2 to 4, **characterized in that** one cyanine dye according to the formula (II) is used with two cyanine dyes according to the formula (I).

7. Colour photographic silver halide material according to any of claims 2 to 6, **characterized in that** it contains tab-grain emulsions.

8. The use of compounds of the formula (I) as spectral sensitisers in colour photographic silver halide materials.

## Revendications

1. Colorant de cyanine répondant à la formule I 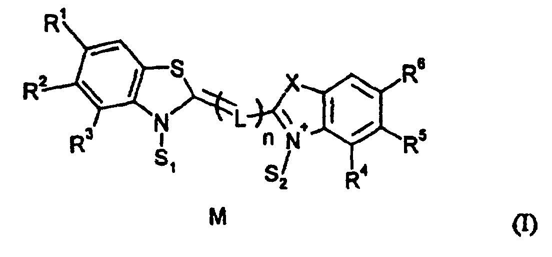 dans laquelle
R¹, R², R³, R⁴, R⁵, R⁶ représentent, indépendamment l'un de l'autre, un atome d'hydrogène, un substituant, ou bien R⁵ de manière conjointe avec R⁶ ou R⁴ de manière conjointe avec R⁵ représente les membres restants pour compléter un noyau benzénique ou un système de noyau naphténique condensé, le cas échéant substitué, avec cette mesure qu'au moins un des substituants R¹, R² ou R³ représentent un substituant benzthiényle,
X représente un atome d'oxygène, un atome de soufre, un atome de sélénium, un groupe CH=CH, un groupe C(CH₃)₂, ou un groupe NR₇ (où R₇ représente un groupe alkyle le cas échéant substitué),
S₁, S₂ représentent, indépendamment l'un de l'autre, un groupe alkyle, un groupe sulfoalkyle, un groupe carboxyalkyle, un groupe -(CH₂)₁-SO₂-Y-SO₂-alkyle, un groupe -(CH₂)₁-SO₂-Y-CO-alkyle, un groupe -(CH₂)₁-CO-Y-SO₂-alkyle, un groupe -(CH₂)₁-NHSO₃⁻, un groupe -(CH₂)₁-N(alkyl)SO₃⁻, un groupe -(CH₂)₁-N(aryl)SO₃⁻, un groupe -(CH₂)₁-CO-Y-CO-alkyle, avec cette mesure que 1 représente de 1 à 6, et Y représente un groupe NH ou N⁻,
n représente 3, 5 ou 7,
L représente des groupes méthine substitués ou non substitués qui peuvent représenter des constituants d'un ou de plusieurs noyaux carbocycliques , et
M représente l'ion antagoniste le cas échéant requis pour l'équilibre des charges.

2. Matériau à l'halogénure d'argent pour la photographie en couleurs contenant au moins une émulsion photosensible à l'halogénure d'argent, **caractérisé en ce qu'**il contient au moins un colorant de cyanine répondant la formule 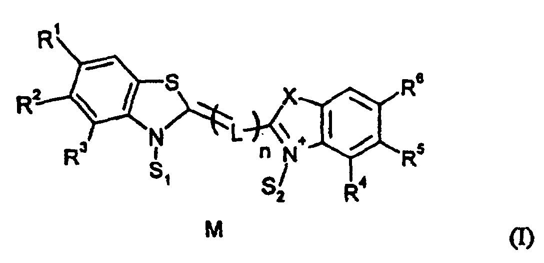 dans laquelle
R¹, R², R³, R⁴, R⁵, R⁶ représentent, indépendamment l'un de l'autre, un atome d'hydrogène, un substituant, ou bien R⁵ de manière conjointe avec R⁶ ou R⁴ de manière conjointe avec R⁵ représente les membres restants pour compléter un noyau benzénique ou un système de noyau naphténique condensé, le cas échéant substitué, avec cette mesure qu'au moins un des substituants R¹, R² ou R³ représentent un substituant benzthiényle,
X représente un atome d'oxygène, un atome de soufre, un atome de sélénium, un groupe CH=CH, un groupe C(CH₃)₂, ou un groupe NR₇ (où R₇ représente un groupe alkyle le cas échéant substitué),
S₁, S₂ représentent, indépendamment l'un de l'autre, un groupe alkyle, un groupe sulfoalkyle, un groupe carboxyalkyle, un groupe -(CH₂)₁-SO₂-Y-SO₂-alkyle, un groupe -(CH₂)₁-SO₂-Y-CO-alkyle, un groupe -(CH₂)₁-CO-Y-SO₂-alkyle, un groupe -(CH₂)₁-NHSO₃⁻, un groupe -(CH₂)₁-N(alkyl)SO₃⁻, un groupe -(CH₂)₁-N(aryl)SO₃⁻, un groupe -(CH₂)₁-CO-Y-CO-alkyle, avec cette mesure que l représente de 1 à 6, et Y représente un groupe NH ou N⁻,
n représente 3, 5 ou 7,
L représente des groupes méthine substitués ou non substitués qui peuvent représenter des constituants d'un ou de plusieurs noyaux carbocycliques , et
M représente l'ion antagoniste le cas échéant requis pour l'équilibre des charges.

3. Matériau à l'halogénure d'argent pour photographie en couleurs selon la revendication 2, **caractérisé en ce qu'**il contient en outre au moins un colorant de cyanine répondant à la formule II 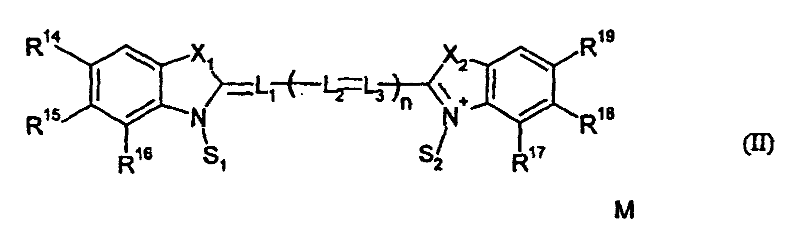 dans laquelle
X₁, X₂ représentent, indépendamment l'un de l'autre, un atome d'oxygène, un atome de soufre, un atome de sélénium, un groupe CH=CH, un groupe C(CH₃)₂, ou un groupe NR₇ (où R₇ représente un groupe alkyle le cas échéant substitué),
S₁, S₂ représentent, indépendamment l'un de l'autre, un groupe alkyle, un groupe sulfoalkyle, un groupe carboxyalkyle, un groupe -(CH₂)₁-SO₂-Y-SO₂-alkyle, un groupe -(CH₂)₁-SO₂-Y-CO-alkyle, un groupe -(CH₂)₁-CO-Y-SO₂-alkyle, un groupe -(CH₂)₁-CO-Y-CO-alkyle, (1 représente de 1 à 6 ; Y représente un groupe NH ou N⁻),
R¹⁴, R¹⁵, R¹⁶, R¹⁷, R¹⁸, R¹⁹ représentent, indépendamment l'un de l'autre, un atome d'hydrogène, un atome d'halogène, de préférence un atome de fluor, un atome de chlore, un atome de brome, un groupe alkyle, un groupe alcoxy, un groupe phényle, un groupe 2-thiényle, un groupe 3-thiényle, un groupe 1-pyrrolyle, un groupe 1-indolyle, un groupe 2-furanyle, un groupe 3-furanyle, un groupe CN, un groupe CF₃, un groupe aryle ; ou bien R¹⁴ de manière conjointe avec R¹⁵ ou R¹⁵ de manière conjointe avec R¹⁶ ou R¹⁹ de manière conjointe avec R¹⁸ ou R¹⁸ de manière conjointe avec R¹⁹ représentent les membres restants pour compléter un noyau benzénique ou un système de noyau naphténique condensé, le cas échéant substitué,
n représente 0 ou 1,
L₁, L₂, L₃ représentent, indépendamment l'un de l'autre, des groupes méthine substitués ou non substitués, et
M représente l'ion antagoniste le cas échéant requis pour l'équilibre des charges.

4. Matériau à l'halogénure d'argent pour photographie en couleurs selon l'une quelconque des revendications 2 et 3, **caractérisé en ce que** les colorants de cyanine répondant aux formules I et II sont présents en une proportion de 0,1 : 10 à 10 : 0,1.

5. Matériau à l'halogénure d'argent pour photographie en couleurs selon l'une quelconque des revendications 2 à 4, **caractérisé en ce qu'**on met en oeuvre un colorant de cyanine répondant à la formule I avec deux colorants de cyanine répondant à la formule II.

6. Matériau à l'halogénure d'argent pour photographie en couleur selon l'une quelconque des revendications 2 à 4, **caractérisé en ce qu'**on met en oeuvre un colorant de cyanine répondant à la formule II avec deux colorants de cyanine répondant à la formule I.

7. Matériau à l'halogénure d'argent pour photographie en couleur selon l'une quelconque des revendications 2 à 6, **caractérisé en ce qu'**il contient des émulsions du type à grains tabulaires.

8. Utilisation de composés répondant à la formule I à titre de sensibilisateurs spectraux dans des matériaux à l'halogénure d'argent pour photographie en couleurs.
